(19)

**Europäisches Patentamt**

**European Patent Office**

**Office européen des brevets**

(11) **EP 4 343 471 B1**

(12) **EUROPEAN PATENT SPECIFICATION**

(45) Date of publication and mention
of the grant of the patent:
**22.07.2026 Bulletin 2026/30**

(21) Application number: **22306416.3**

(22) Date of filing: **26.09.2022**

(51) International Patent Classification (IPC):
***G05B 19/4093*** (2006.01)

(52) Cooperative Patent Classification (CPC):
**G05B 19/40935;** G05B 2219/36323;
G05B 2219/45212

(54) **METHOD FOR GENERATING A TOOL PATH FOR ENGRAVING ON VARIOUS SHAPED SURFACES**

VERFAHREN ZUR ERZEUGUNG EINES WERKZEUGWEGES ZUR GRAVUR AUF UNTERSCHIEDLICH GEFORMTEN OBERFLÄCHEN

PROCÉDÉ DE GÉNÉRATION D'UN TRAJET D'OUTIL POUR GRAVER SUR DIVERSES SURFACES FAÇONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2024 Bulletin 2024/13**

(73) Proprietor: **Ratier-Figeac SAS
46101 Figeac Cedex (FR)**

(72) Inventors:
• **ANDRIEU, Bruno
12260 Villeneuve d'Aveyron (FR)**
• **BRELAUD, Eric
46100 Capdenac-Le-Haut (FR)**

(74) Representative: **Dehns
10 Old Bailey
London EC4M 7NG (GB)**

(56) References cited:
**EP-A1- 3 945 381        CN-A- 112 659 796
US-A1- 2014 200 708        US-A1- 2015 005 924
US-B1- 10 466 681**

• **SUK-HWAN S ET AL: "Neural Network Modeling
for Tool Path Planning of the Rough Cut in
Complex Pocket Milling", JOURNAL OF
MANUFACTURING SYSTEMS, SOCIETY OF
MANUFACTURING ENGINEERS, DEARBORN,
MI, US, vol. 15, no. 5, 1 January 1996
(1996-01-01), pages 295 - 304, XP004013911,
ISSN: 0278-6125**

**Description**

FIELD

This invention relates to Computer-Aided Manufacturing (CAM) systems and Computer Numerically Controlled (CNC) machines and specifically the generation of toolpaths for CNC machines to engrave numbers/text/letters/symbols/characters or the like onto the surface of a workpiece.

BACKGROUND

Recently, as opposed to purely manual tooling of parts, Computer-aided Manufacturing (CAM) has been used to quickly, and accurately machine said parts. CAM can use numerical control (NC) computer software to automate the control of machines and machine tools in the manufacturing process. This speeds up manufacturing with increased accuracy and reduced waste.

The machining of such parts may be done on a Computer Numerically Controlled (CNC) machine, which comprise a motorized manoeuvrable tool and often a motorized manoeuvrable platform. CNC machines have several axes of movement between both the cutting tool and the workpiece, and operate by according to instructions provided by means of ISO files (which contain G-code and M-code language that pilots a CNC machine), thereby fully describing the tool path relative to the workpiece. This therefore describes what will be machined by the CNC machine for a defined operation, and therefore, describe the machining operation to be completed.

On a given part (whether machined by a CNC machine or otherwise), it may be desired that a marking be applied to the surface of the part. For example, individual parts might be marked with a unique serial number, or other identifier, which allows for the specific identification of said part. Additionally/alternatively, a number of parts may be marked with the same marking, for example, a number of parts produced by the same manufacturing run may be marked with a common batch number. This may be achieved by engraving such a marking on a desired surface of a part, for example, using CAM, and a CNC machine. This, however, presents issues in that the desired tool path must be modified, depending on the contours of the surface upon which it is to be applied, or the path which the text must follow.

Previously, it has been necessary to manually write a toolpath to engrave a specific image/text, depending on various shapes/contours of the surface (for example, long or wide text on the side of a cylinder, text on the base of the cylinder following the rounding, in a groove following the perimeter of the cylinder). Similar issues can be present when it is desired that the text follows a non-linear path (for example, if the text is to follow an arc). Regardless of whether the text is the same for each part (for example, a batch number), or varying (for example, a different serial number for each machined part), a unique machining file needs to be made.

In general, the tool path is created from a Computer Aided Design (CAD) software and relies on a 3D model. The CAD software generates a generic source file, such as an APT source file which is a standard language file that describes a tool path independently of the physical geometry of the CNC machine. The APT source file therefore defines a generic tool path. Then this file is converted by a post processor (PP) software specific to the CNC machine that will machine the part. Essentially the PP software translates the generic paths of the APT file generated by the CAD software into specific NC code for the specific CNC machine that is to be used. In this way, the PP software does not create the tool path but only converts an existing one (i.e. the path of the APT file from the CAD program) to be a toolpath readable by the specific CNC machine, considering its physical geometry such as the axes of the tool and/or part movement.

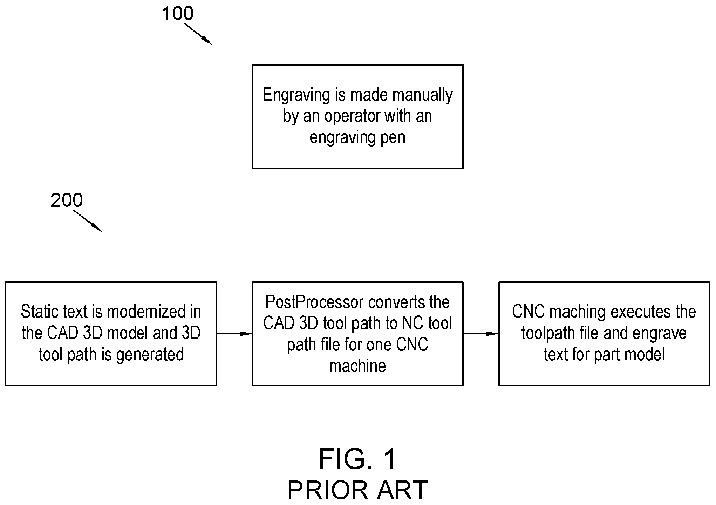

An overview of these known methods is shown in Figure 1, which shows a first method 100 which is the manual engraving on a part surface by an operator with an engraving pen. Alternatively, there is method 200, in which an operator manually defines static text following the desired surface on a CAD model, and generates a toolpath for that specific text, and that toolpath is then converted by the PP to specific NC code for the CNC machine, which may then be executed.

EP3945381A1 describes a method for producing and/or machining non-conical surface of workpiece, that involves executing parts program by numerical control for generating relative movement along path determined by parts program.

CN112659796A relates to a method for engraving product numbers by using a numerical control machine tool. US10466681B1 relates to systems and methods for machining knowledge reuse. US2015005924A1 relates to a machining program creating apparatus, a machining program creating method, and a machining program creating program for creating an numerical control machining program for causing a numerical control apparatus to execute numerical control for a machine tool.

**SUMMARY**

In a first aspect, there is provided a computer-implemented method of generating a toolpath for engraving at least one character on a surface of a workpiece. The method comprises receiving, by a post processor, PP, information pertaining to:

the shape of the surface to be engraved on the workpiece;
an area to be engraved on the surface of the workpiece;
at least one character to be engraved on the surface of the workpiece; generating, by the PP, a toolpath for engraving the at least one character on the surface of a workpiece by:
mapping a pre-stored predefined reference 2D toolpath of each character to be engraved on the surface onto the surface to be engraved according to the received information.

Such a method allows for a much faster, and more robust way of generating toolpaths for a wide range of shaped surfaces/curved text lines, without the user having to manually map the text onto the surface. Rather, by moving the generation of the toolpath onto the PP, it is possible to map a simple 2D reference toolpath of each character onto the surface the workpiece without further definition on behalf of the user, other than an indication of the shape of the surface, an area to be engraved, and at least one character to be engraved on the surface. This removes most of the manual work that has previously been done when creating toolpaths, including the specific modelling of a desired engraving onto the surface of a workpiece on a CAD program.

The shape of the surface to be engraved on the workpiece may be denoted by any kind of information that is received by the PP, and provides a prompt for the PP to map an engraving onto the surface.

The output toolpath may be in the form of an ISO file, which can be directly read by a CNC machine associated with the PP.

Used herein, the term "character" refers generally to any kind of object that is to be engraved on a workpiece. The at least one character to be engraved on the surface may comprise one or more letters and/or numbers and/or symbols, or other similar markings that might be applied to a surface.

The above method may be used to define a specific toolpath/specific toolpaths, where the character(s) to be engraved is/are known in advance and a specific toolpath is set with the knowledge of said characters. In this way, the information received by the PP may comprise a list of distinct characters to be engraved respectively on successive workpieces, and/or a list of distinct shapes of different workpieces to be engraved, and/or a list of distinct geometric characteristics of the CNC machine engraving tool, and the data is selectable from said list or lists in the PP for generating the toolpath.

In this way, there may be provided a computer-implemented method of generating a toolpath for engraving at least one character on one or surfaces of one or more workpieces. The method comprises receiving, by a post processor, PP, information pertaining to:

the shape of the surfaces to be engraved on each of the workpieces;
areas to be engraved on the surface of the workpieces;
a list of distinct characters to be engraved respectively on successive surfaces of the workpieces;
generating, by the PP, a toolpath for engraving the at least one character on the surfaces of a workpieces by:

selecting the information on the PP for a given workpiece;
mapping a pre-stored predefined reference 2D toolpath of each character to be engraved on the surfaces onto the surface to be engraved according to the selected information.

Additionally, or alternatively, the generated toolpath may be an adaptative toolpath file, which when executed by a CNC machine, collects input characters to be engraved from the CNC machine, and adapts the executed toolpath so as to engrave the collected input characters. In this way, a single toolpath file may be provided that is capable of providing unique engravings, such as different serial numbers on each workpiece.

Therefore, the input characters may be serial numbers or a list of serial numbers to be engraved on successive workpieces. Alternatively, the input characters may be input by a user in response to a prompt.

The above method may further comprise the actual step of pre-storing the predefined reference 2D toolpath of each character on the PP. Any possible character may be stored on the PP in this step. For example, where the engravings are to be alphanumeric serial numbers, a predefined reference 2D toolpath for each of the letters a-z, and each of the numbers 0-9 may be prestored on the PP. Then, only the reference toolpaths of the characters to be engraved will then be mapped on to the surface, as required. The predefined reference 2D toolpath may be, for example, each character in the form of a 9x9 matrix.

The surface to be engraved on the workpiece may be a non-planar 3D surface, and/or the information received by the PP may comprise a non-straight text line that the characters to be engraved are to follow.

The information received by the PP may comprise geometric characteristics and operation of an associated CNC machine engraving tool.

The step of mapping the predefined reference 2D toolpath of each character to be engraved on the surface onto the surface to be engraved may comprise applying one or more geometric algorithms to the predefined reference 2D toolpath of each character according to the received information regarding the shape of the surface to be engraved. These geometric arguments may be prompted by the information that is received by the PP pertaining to the shape of the surface that is to be engraved. For example, the received information may comprise an "argument" that is related to the shape of the surface, and that prompts the PP to perform one or more geometric transformations so as to map the 2D reference toolpath for each character onto the surface of the workpiece.

The received information may comprise information regarding the desired width and spacing of the characters to be engraved.

The received information may part of a source file, such as an APT file, generated by a CAD program.

As would be appreciated, the calculation of a suitable tool path may find use in a wider method of machining a workpiece.

Therefore, in a second aspect, there is provided a method comprising

generating a toolpath as outlined above;
loading a workpiece into a CNC machine;
engraving, by the CNC machine, the characters on the surface of the workpiece according to the generated tool path.

This may form a small part of machining the workpiece. In this way, the workpiece may begin as a blank block, which is firstly machined into a desired shape, and then an engraving is applied to one or more of its surfaces. Alternatively, the workpiece may comprise a pre-machined workpiece, and the method only comprises the engraving on the workpiece.

The above method may be implemented in a control system configured to perform the method of the first aspect.

Therefore, in a third aspect, there is provided a system for generating a tool path comprising a post processor, PP, for a CNC machine configured to receive information pertaining to:

the shape of the surface to be engraved on a workpiece;
an area to be engraved on the surface of the workpiece;
at least one character to be engraved on the surface of the workpiece;

generate a toolpath for engraving the at least one character on the surface of a workpiece by:
mapping a pre-stored predefined reference 2D toolpath of each character to be engraved on the surface onto the surface to be engraved according to the received information.

Such a system may be provided as a wider CNC system for engraving a workpiece.

Therefore, in a fourth aspect, there is provided a system for engraving a workpiece, the system comprising;

a CNC machine configured to engrave characters on a surface of a workpiece; and
a system for generating a toolpath as described above, wherein the PP is operatively connected to the CNC machine such that the CNC machine is configured to receive a toolpath from the PP.

BRIEF DESCRIPTION OF THE DRAWINGS

Certain examples of the disclosure will now be described, by way of example only, with reference to the accompanying drawings, in which:

Figure 1 shows various prior art methods for performing an engraving;

Figure 2 is an illustration showing how a received APT file can define an area in which engraving is to occur;

Figure 3 shows an engraving on a flat XY plane;

Figure 4 shows an engraving on a flat YZ plane;

Figures 5A, 5B and 5C show a lateral engraving on the surface of a cylinder;

Figures 6A, 6B and 6C show a longitudinal engraving on the surface of a cylinder;

Figures 7A and 7B show an engraving within a groove;

Figure 8A shows an engraving within a circumferential groove of a cylinder;

Figure 8B illustrates in detail various G-code movements in relation to Figure 8A

Figure 9 illustrates the calculation of various engraving points within a groove; and

Figure 10 illustrates and example method of generating a tool path.

DETAILED DESCRIPTION

Whilst the description herein refers to only lathes it would be appreciated that the teaching herein could be applied to any CNC tooling device, as far as possible. In addition, the object to be engraved onto a surface is referred to herein interchangeably as numbers/text/letters/symbols/characters or the like. The skilled person would recognise that any references to these could equally be applied to any other similar markings that might be applied to a surface.

As described above, typically it has been necessary to individually generate a toolpath using a CAD program to engrave a specific image/text, depending on various shapes/contours of the surface, and/or the path that the text is to follow.

This presents issues particularly in the following situations:

- Engraving on a flat surface within a four-sided shape (i.e. rectangle or trapezium)
- Engraving on a cylinder, where the engraving follows the axial direction
- Engraving on a cylinder, where the engraving follows the circumferential direction
- Engraving within a groove integrated in a flat surface
- Engraving within a groove integrated in a cylinder following the circumferential direction
- Engraving on a ring-shaped surface on a flat face (for example, a flat surface on the end of a cylinder, or at the oblique face of a cone)
- Engraving on a delimited left surface described in 3 dimensions

Of course, issues are also present when engraving on other types of 3D surfaces, or on other types of non-straight text areas, whether they are defined on 2D or 3D surfaces.

However, the inventors in this case have recognized that it is possible to provide a simpler method of generating a toolpath for engraving numbers/letters using a specific CNC machine by adding new functionality to the CNC machine's PP, and using the PP to actually generate the toolpath, as opposed to only using the PP to convert a generic toolpath to a path for a given CNC machine.

In this way, a PP may be provided containing means to calculate a specific tool path to write desired characters and/or numbers, configurable in width, height and spacing. In order to do so, the PP is provided with reference/template 2D toolpaths of each character on a straight text line that may be engraved on a given workpiece. These reference/template 2D toolpaths may then be mapped onto the surface of a specific workpiece.

Such a PP may be able to create a specific toolpath file (for example, an ISO file) that is able to read a serial number from a CNC machine's variable modifier (e.g. serial numbers that are input by an operator), and therefore adapt the engraving "on-the-fly" with the desired number. In this way the PP can integrate into the toolpath file a tool path for all digits (0 to 9), or other characters that might be engraved, including their relative coordinates, and then the output specific toolpath file can adapt its execution according to the serial number to be engraved, for example when the operator inputs a desired serial number/other identifier to the CNC machine.

The PP may contain logic to transform a flat tool path (i.e. a toolpath corresponding to a marking that may be placed directly on a flat surface), into a curved tool path corresponding to the shape of the part that is to be engraved and/or to a curved tool path related to a non-straight text to be engraved on a flat surface. Equally, the PP may use a bearing surface that is described by a sweeping toolpath made by the CAD software. By doing so, it is possible to perform any of the engraving situations outlined above.

By adding such functionalities into the PP, it is possible to reduce the work of the programmer and improve the quality and speed of the manufacturing execution. As such, the programmer does not need to have, or provide the desired text/numbers in a 3D format and/or create a tool path to follow the outline of the letter on a given surface. Rather, the programmer needs only to provide generic information regarding the workpiece, the area to be engraved, and an input of what is to be engraved (e.g. an alphanumeric input and/or other symbols/characters that are to be engraved), and which kind of surface is to be engraved (e.g. flat, curved, grooved etc.).

This avoids the need for time consuming generation of individual tool paths for each serial number, on each surface. In addition, with such a generic program that can generate the desired tool paths given only a simple input as described above, the manufacturer would need to manage only a single tool path file that is able to engrave all Serial Numbers. This may be achieved whilst maintaining a quality of engraving such that each letter/number is easily readable by creating specific toolpaths for a given CNC machine. This is achieved even whilst avoiding the need for the programmer to draw the engraving in 3D and then make the tool course, because it is the PP software that generates the specific toolpath, taking into account the surface on which it is to be engraved.

In addition, the programmer can configure the engraving of a serial number or a batch number to be a desired location on the part, and the postprocessor software can make a path conditioned by the number stored in the CNC machine. Therefore, it is possible to replace manual engraving, which is long and less readable than machine engraving.

The software stores information regarding the necessary toolpath for drawing of the letters and numbers in the PP, and draw them according to the area to be engraved and the surface to be followed (e.g. whether it is an arc, cylinder, groove). The PP contains the logic that takes into account a serial number stored in the CNC machine (e.g. a serial number input into the machine) to switch on engraving parts of the right numbers in the right places in order to engrave the serial number of each part, with a single ISO file.

In order to generate a suitable toolpath for engraving, the PP may receive a source file (such as an APT file) from a known CAD software. The APT file may define, for example, the following syntax for the PP to utilise in order to generate a text burn path:

ENGRAVE/TEXT, MMPM, plunge advance, engraving advance, ascent advance, DEEP, engraving depth, WIDTH, proportion width digit, SPACE, proportion interval space, RETRCT, Z rise in engraving, XPLAN, LRADIUS, ON, CAXIS, GORGE, throat radius, VALUE, text to engrave

ENGRAVE/NUMSN, number of characters, VARIABLE, Okuma variable, MMPM, plunge advance, engraving advance, ascent advance, DEEP, engraving depth, WIDTH, proportion width digit, SPACE, proportion interval space, RETRCT, Z rise in engraving, XPLAN, LRADIUS, ON, CAXIS, GORGE, throat radius

As can be seen, the received APT file defines certain arguments (e.g. XPLAN, LRADIUS, ON, CAXIS, GORGE) that can inform the PP of the geometry of the surface to be engraved, or the path that the defined text is to followed. Such arguments may be defined by a user, and then the PP may use this information to prompt the generation of a specific tool path that is made for that geometry, for example as defined below with regards to various arguments. Using the prompt of such arguments, the PP may map pre-stored 2D reference characters (e.g. each character in the form of a 9x9 matrix) onto the surface of a workpiece by applying certain geometric algorithms to the reference characters. Several examples of such arguments, and the respective transformations are described below.

When generating an APT file from a CAD program, the user may be prompted to input one or more arguments, or the user may otherwise add the argument to the output APT file. Several suitable arguments that may be added to the APT file are further defined below.

Such a method may be used with any suitable cutter, for example a milling cutter, or a woodpecker type tool to mark text on the piece. The engraving may be defined in a number of ways. For example, either it is a macro specific to the CNC which writes the text, and as such the PP can position the CN variables according to the APT command, and launch the macro, which can in turn define what is to be engraved, for example the lot number, the date, and the serial number of the part. Additionally/alternatively, the PP may already know the text to be written (e.g. a user may input the text/numbers) and as such, the PP draws each letter in the output ISO.

In this way, the PP contains the information necessary to draw each character from a 9x9 matrix, including the information for raising and lowering of the tool piece in order to start/stop the engraving of the character.

Further, the PP receives (or already comprises) information pertaining to the shape that is to be engraved (i.e. the shape of the surface to be engraved, e.g. following a cylinder, in a groove etc.), and/or the path that the text is to follow (e.g. if the text is to follow an arc). Using this knowledge, as well as the above indication of the characters to be engraved, the PP can draw all the characters for engraving by mapping the 9x9 matrix of the character onto the surface to be engraved. This may be achieved by applying one or more geometric transformations, such as one of the transformations outlined below.

As such, the PP can output a specific ISO code containing the instructions which have broken down the characters/numbers (which were stored in a variable), which must be engraved. In this way, all numbers/text/symbols etc. that may be potentially engraved may all be output in the ISO file, as a template of drawing of the numbers 0 to 9, or the corresponding text characters, and/or corresponding symbols. Then, depending on what is to be engraved, the relevant numbers/characters/symbols etc. are called by "GOTO n° bloc", which allows for the correct number/character/symbol to be registered in the right place.

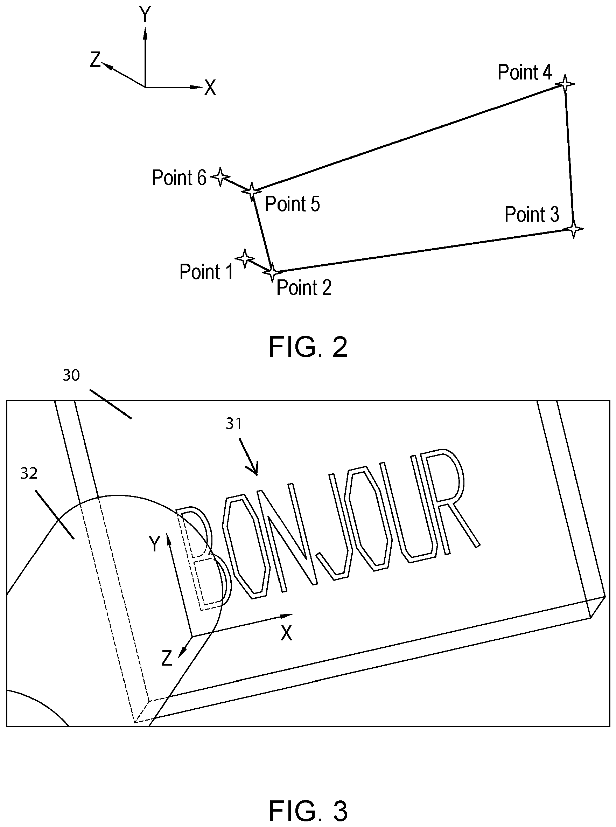

In general, in order to engrave, the PP must follow an APT ENGRAVE instruction, which typically comprises at least six points defining a total envelope for the engraving, and then an ENGRAVE/OFF instruction. Six such points can be seen in Figure 2, and the 6 points must meet the following rules:

- Point 1: a point above the surface (in the Z direction) ready for the approach into the surface

- Point 2: descent in the Z direction (i.e. into the material to begin engraving. Between point 1 and 2, only the Z coordinate should vary, and there is an error if Z2>=Z1 (i.e. if points 1 and 2 are positioned such that Z2 is further away from the surface to be engraved than Z1)
- Points 3,4 and 5 vary in X and Y at the same Z, which traces the area to engrave
- Point 6: a reverse of the movement between points 1 and 2, thereby bringing the cutting tool above the part, and in that way, only Z must vary compared to point 5

In the example of Figure 2, the surface to be engraved lies on the XY plane. As would be appreciated, if the engraving is to be done on the plane normal to X, similar points to those above may be defined, with a simple replacement in the constraints above of the Z by the X. In such a case, the movement in X would move the cutting tool normal to the cutting surface.

The four-sided polygon passed between the ENGRAVE and the ENGRAVE/OFF instructions may be used to describe the space that is to be occupied by the text/numbers to be engraved in height and width. In the example of Figure 2, the height is defined by the segment of point 2 to point 5 and the width is defined by the segment of point 2 to point 3. These parameters can be used to vary the style of the engraved text/numbers

Then WIDTH and SPACE arguments can be used to define the proportion of the width of the single character (WIDTH) compared to the total width taken by each character and its space (WIDTH+SPACE), the total of which add up to the total area of the polygon referred to above. Without additional WIDTH and SPACE arguments, the single character may take 8/11ths of the slot, and the space may take 3/11ths of the slot. Due to the fact that the thickness of the vertical stroke is not zero (i.e. the cutting tool does not have zero thickness), the character visually encroaches on the space. So, for example, it may be desirable to put **"WIDTH, 3, SPACE, 2"** when in "XPLAN, CAXIS", as explored further below. Accordingly, the size of the text may be calculated depending on the total number of items that are to be engraved, such that all of the engravings fit within the desired area.

The PP draws the tool path by positioning the bottom of the characters on the Pt2 - Pt3 segment and the top of the characters on the Pt5 - Pt4 segment. This allows for the engraving of characters either at an angle, or characters that change height between two characters.

In order to be able to engrave text on a range of differently shaped surfaces, the input APT generic tool path file contains all relevant arguments for the engraving, and the PP then generates the specific tool path file for the specific CNC machine taking into account the arguments within the received APT file.

In the absence of any other arguments, engraving will be done on a flat XY plane, with the tool along the Z axis, as seen in Figure 3, which shows an engraving of text 31 by tool 32 on a surface of workpiece 30 that lies on the XY plane. In this way, the APT file that is imported to the PP may read as follows:

```
ENGRAVE/TEXT, VALUE,BONJOUR
GOTO/10,10,69,0,0,1
GOTO/10,10,60,0,0,1
GOTO/40,10,60,0,0,1
GOTO/40,20,60,0,0,1
GOTO/10,20,60,0,0,1
GOTO/10,20,69,0,0,1
ENGRAVE/OFF
```

As can be seen, the example APT file the command to be completed (i.e. an engraving of text with the engrave/text command), as well as the text that is to be engraved (in this example, "BONJOUR"). Then, the APT file defines 6 "GOTO" points in terms of an X-coordinate, a Y-coordinate and a Z-coordinate, similar to those as discussed above, thereby defining a rectangle in which engraving is to be applied. The "GOTO" coordinate also defines the oriented vector of the cutting tool that will be engraved in terms of vector components X-direction, Y-direction, and Z-direction. As can be seen, in this case, the engraving tool is parallel to the Z-axis. Finally, after defining the area/direction in which the engraving of the text is to occur, the APT defines an "ENGRAVE/OFF" command. The PP takes this information, along with the text to be engraved, and deduces a specific tool path for its CNC machine so as to produce the engraving within the rectangle.

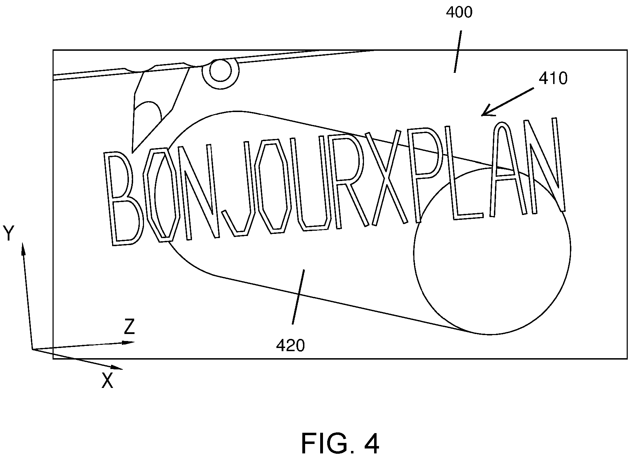

Should it be desired that the engraving take place in the x direction (i.e. on a surface defined on the YZ plane), then it would be necessary to invert the X and Z axis of the engraving program. As such, the APT file may be provided with such an argument, such that the PP may take into account such an argument so as to achieve such a transformation. Such an example is shown in Figure 4 which shows an engraving of text 410 by tool 420 on a surface of workpiece 400 that lies on the YZ plane, where an XPLAN argument is applied to the APT file, and as such, an example APT file may read as follows:

```
ENGRAVE/TEXT,XPLAN,VALUE,BONJOURXPLAN
```

```
GOTO/40,20,60,1,0,0
GOTO/20,20,60,1,0,0
GOTO/20,20,120,1,0,0
GOTO/20,10,120,1,0,0
GOTO/20,10,60,1,0,0
GOTO/40,10,60,1,0,0
ENGRAVE/OFF
```

As can be see, the APT file here reflects the one provided above , and may be provided with the necessary argument (in this case, XPLAN) which allows the PP to generate a specific toolpath that takes into account the surface/path that the engraving is to follow. In the above example, with such an XPLAN argument, the tool is considered to follow X, so there is applied an inversion of X and Z in the behaviour of the engraving program. Therefore, the above rules become as follows:

- Point 1: a point above the surface (in the X direction) ready for the approach into the surface
- Point 2: descent in the X direction (i.e. into the material to begin engraving. Between point 1 and 2, only the X coordinate should vary, and there is an error if X2>=X1 (i.e. if points 1 and 2 are positioned such that X2 is further away from the surface to be engraved than X1)
- Points 3,4 and 5 vary in Z and Y at the same X, which traces the area to engrave
- Point 6: a reverse of the movement between points 1 and 2, thereby bringing the cutting tool above the part, and in that way, only X must vary compared to point 5

In addition, the oriented vector of the cutting tool is defined in the X direction. The calculation of the engraving points for each character is not impacted by this type of engraving, but the clearance of the tool must be modified so as to allow for the removal of the tool form the surface, as it is necessary to clear in X rather than in Z.

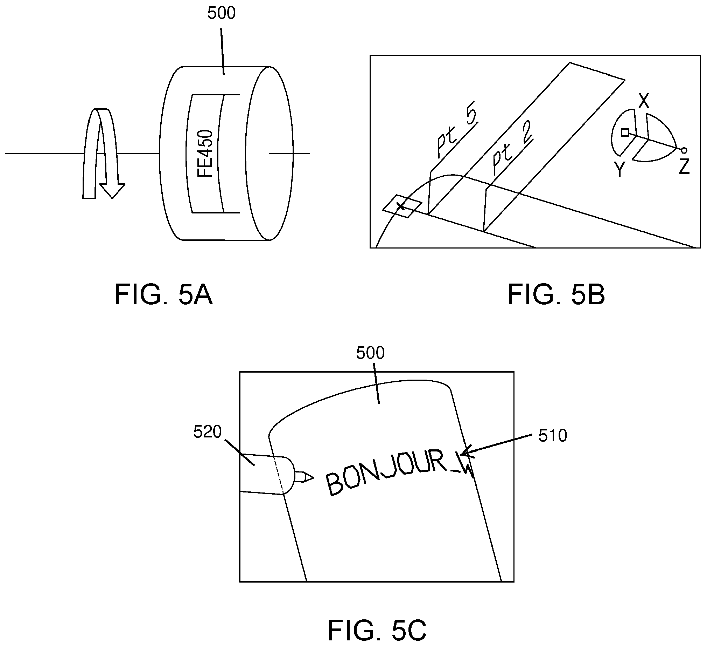

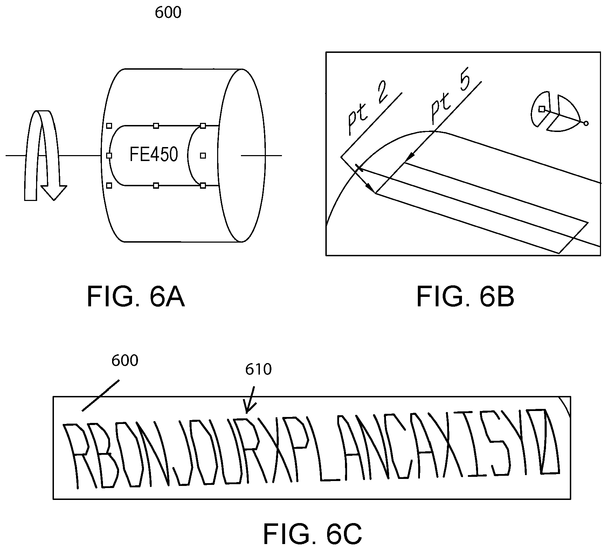

As alluded to above, arguments can also be applied to the APT file such that the PP may generate tool paths for engraving on surfaces that do not solely lie within a flat plane. For example, it may be desired that an engraving is applied to the surface of a cylinder. One such example may be seen in Figures 5A, 5B, 5C, 6A, 6B and 6C. In order to engrave on these surfaces, the PP may apply a CAXIS argument, optionally in combination with an XPLAN argument described above.

The XPLAN argument should be used in combination with the CAXIS argument as it defines that the engraving is done on the top of the part (when the cylinder extends along a horizontal axis of the part).

With the CAXIS argument, a rotary axis may be used to describe the curved band on which it is desired to engrave, where the center of this arc is the center of the axis of rotation. In such a case, the 4-sided polygon described above must have at least points 2 and 5 inscribed within the cylinder which serves as the basis for writing the text.

Whilst there are 3 possible directions of writing, the principle remains the same: with the CAXIS argument, the displacement of the cutting tool in Y axis to draw the character is replaced by a rotation of the cylinder. In this way, as opposed to having to move the cutting tool in the y direction, a constant depth engraving may be achieved in this direction by simply rotating the cylindrical workpiece along its central axis C.

In the case of lateral writing (i.e. writing extending around the circumference of a cylinder 500) shown in Figures 5A, 5B and 5C, the C axis revolves alone (without Y) to make the horizontal portions of the characters/numbers, and the C and Z axes evolve for the oblique portions of the text. Similarly, vertical bars are made with movement of the cutting tool in the Z direction only. In the CAD program, the user must create the rectangle defining the as shown in Figure 5B. In this way, point 2 is the start of the base of the letter and point 5 is the start of the top of the letter. This results in an engraving as shown in Figure 5C. An example APT file that might be used by the PP to result in the engraving of text 510 on cylinder 500 by tool 520 may contain the engrave instruction, the arguments that need to be applied to follow the desired surface, the desired width and spacing of the text, as well as the text to be engraved, and might read as follows:

```
ENGRAVE/TEXT, XPLAN, CAXIS, WIDTH,9, SPACE,3, VALUE, BONJOUR_XPLANCAXIS_Y
GOTO/60, 0,80,1,0,0
GOTO/50, 0,80,1,0,0
GOTO/50,-200,80,1,0,0
GOTO/50,-200,70,1,0,0
GOTO/50, 0,70,1,0,0
GOTO/60, 0,70,1,0,0
ENGRAVE/OFF
```

As can be seen, the APT file that is used by the PP in this case may comprise the command to be completed (i.e.

an engraving of text with the engrave/text command), and then two arguments, in this case, XPLAN and CAXIS - instructing the PP to generate a toolpath for engraving in the x direction, and around a cylinder. Then, the APT command defines the WIDTH and SPACE arguments to be used to define the proportion of the width of the single character (9) compared to the total width taken by each character and its space (9+3). The text that is to be engraved is also defined (in this example, "BONJOUR_XPLANCAXIS_Y"). Then, as above, the APT file defines 6 "GOTO" points in terms of an X-coordinate, a Y-coordinate and a Z-coordinate, and the oriented vector of the cutting tool in terms of the X-direction, Y-direction, and Z-direction. Finally, after defining the area/direction in which the engraving of the text is to occur, the APT defines an "ENGRAVE/OFF" command.

In the case of longitudinal writing (i.e. writing extending along the length of the cylinder) shown in Figures 6A, 6B, and 6C, the C axis revolves alone (without Y) to make the vertical portions of the characters, and the C and Z axes evolve together for the oblique portions of the text. Horizontal portions are made with movement of the tool in the Z axis only. In the CAD program, the rectangle should be created as seen in Figure 6B. Points 2 and 5 are on the cylinder and the text will start with point 2 at the base and point 5 at the top of the letter. This results in an engraving as shown in Figure 6C. An example APT file that might be used by the PP to result in such an engraving might read as follows to engrave the text "RBONJOURXPLANCAXISY0":

```
ENGRAVE/TEXT,XPLAN,CAXIS,VALUE,RBONJOURXPLANCAXISY0
GOTO/40, 0, 60, 1, 0, 0
GOTO/20, 0, 60, 1, 0, 0
GOTO/20, 0, 160, 1 0, 0
GOTO/20, -10, 160, 1, 0, 0
GOTO/20, -10, 60, 1, 0, 0
GOTO/40, -10, 60, 1, 0, 0
ENGRAVE/OFF
```

A similar argument may be applied for oblique writing, where the C axis revolves when there is a Y component in the displacement to form the character.

In summary, any displacement in Y when engraving on a cylinder should be replaced by a rotation in the C axis without recalculation of the X axis of the tool because, in principle, the writing is done at constant X which must be the radius of the cylinder of the part which one engraves (except for the raising of the pencil between the letters, and if the GORGE argument is associated, as further explored below).

This operation is done in the PP by recalculating the points to be output in order to form the character, whilst considering the coordinates on the surface of a cylinder, and not on a flat plane. In this way, each Cartesian X and Y coordinate is replaced such that the X-polar value of this point represents the value of the radius of the arc that the tool subtends (i.e. the depth of the engraving), but without changing the C-polar value of the point. In this way, raising the tool only impacts the X component. The X value is also impacted if the character must follow a different shape around the surface of a cylinder - for example, a concave shape of a groove around the cylinder.

As would be appreciated, the PP generates instructions including instructing the CN controller the direction of rotation of the C axis when the C draws the character to avoid a complete turn to make a 2 or 3° turn only. For example, the PP may generate instructions according to Okuma control, for both clockwise, and anti-clockwise rotation.

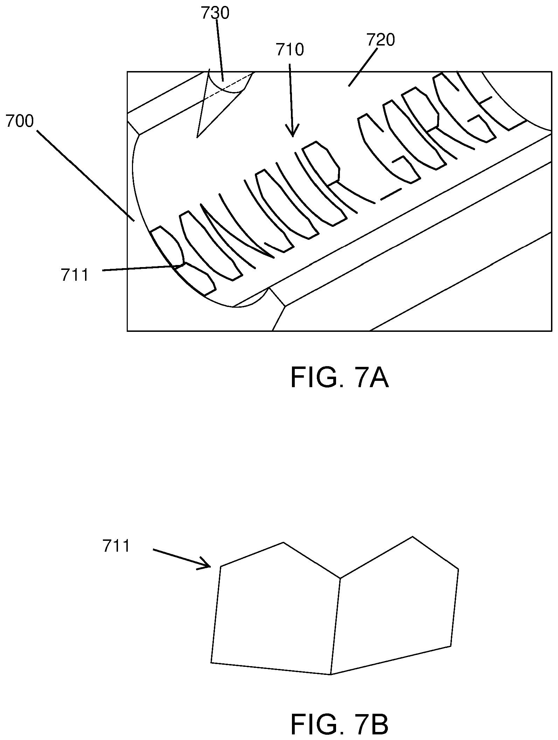

It may be desired to make an engraving within a groove, as seen in Figure 7A, and therefore, a corresponding argument will need to be applied by the PP. For example, the PP may receive a GORGE argument from the received APT file. Again, the XPLAN argument may also be applied so as to ensure that the engraving occurs on the top of the part. As such, engravings can be made in a narrow groove where the characters must follow a concave curvature between the top and the bottom of the character. In order to do so, the rectangle drawn in the CAD program should represent, as before, the size of the characters, and the radius of the groove as a geometric value, and the rectangle should be placed at the bottom of the groove.

As outlined above, the PP (given the input file) generates an output file that is readable/usable by the CNC machine - for example an output ISO file. Such a file may contain programming language that is used in CNC, such as G-code. In the case of engraving in a groove, the APT file should define a value for the radius of the groove in which it is desired to engrave. This engraving radius must integrate the engraving depth because it is the radius of the G2 G3 G-code (defining circular interpolated motion) of the output ISO file that will draw the concave arc when the tool is engraving.

The PP, with this value, will calculate the corrected coordinates of the points which draw the character considering that the points which represent a character must describe an arc of a circle of having a radius of the value given after the GORGE command.

Thus, the left side of the letter B (the first letter of the example shown in Figure 7A), which is straight, will be engraved in a curve so as to follow the curvature of the throat, resulting in the tool path seen in Figure 7B, when viewed in profile from the left side.

As above, whilst the curvature is going to be done in G2 or G3 of the G code which define the arc movement, a movement in C must be done in addition with the CAXIS argument.

It is possible that certain CNC machines refuse a C movement (i.e. movement about the central axis of the cylinder) during a G2 or a G3 movement (i.e. the kind of movement that is associated with a curved movement up the side of the groves). In such a case the PP may produce an ISO code so as to rotate the workpiece relative to the cutting tool in C so as to position itself in the middle of the character, and then make the remaining movement to engrave the character with Y and Z. In this way, and as can be seen in Figure 7B, which illustrates the toolpath used to engrave the "B" 711 of the text 710 within the groove 720 of the workpiece 700, the curvature of the cylinder may not be exactly followed. In any case, the defect is minimised as the error is distributed on the right and on the left of the character, due to the central placement of the cutting tool in the middle of the character.

An example APT file that results in this would be as follows:

```
ENGRAVE/TEXT,XPLAN,VALUE,BONJOUR_GORGE,GORGE,12
GOTO/40, 10, 60, 1, 0, 0
GOTO/20, 10, 60, 1, 0, 0
GOTO/20, 60, 60, 1, 0, 0
GOTO/20, 60, 70, 1, 0, 0
GOTO/20, 10, 70, 1, 0, 0
GOTO/40, 10, 70, 1, 0, 0
ENGRAVE/OFF
```

Such an APT file follows the conventions outlined above. Firstly the "engrave text" command is outlined. Then the XPLAN argument is defined. The text to be engraved "BONJOUR_GORGE" is defined, as is the GORGE argument considered above, as well as the radius of the groove. Then, each point of the rectangle on the surface of the workpiece is defined, as is the direction of the tool. Finally, the engrave command is ended.

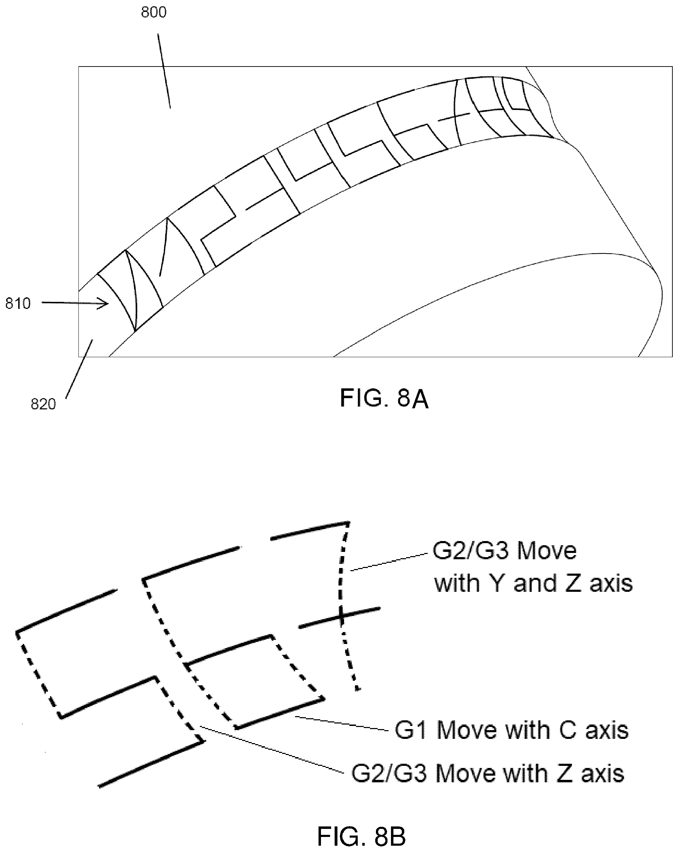

As alluded to above, it is possible to apply a combined argument of XPLAN, GORGE and CAXIS, to allow for the PP to produce toolpaths for engraving text 810 within a groove 820 on the surface of a cylinder 800, as seen in Figure 8A. In this way, the two arguments GORGE and CAXIS is to be used when the throat is in revolution around the central axis of the cylinder C.

Such a case associates the calculation of X, Y, Z, C of the management of the groove with the management of the path around a cylinder. As described above, in the case where G2/G3 movements cannot be combined with movements in C, by positioning itself first in C in the middle of the character to be engraved, then by changing the Y for the horizontal and oblique parts and passing in an arc of a circle G2/G3 as soon as X or Z evolves to draw the hollow of the throat. In this way, movements of the cutting tool in X, Y, Z and a rotation of the workpiece in C may be simultaneously used so as to engrave within a throat.

An example of the kind of movements that may be required in order to produce an engraving within a groove such as the one seen in Figure 8A may be seen in Figure 8B. Each line that is to be engraved within the groove and around the cylinder may be described in terms of various movements. A horizontal movement (e.g. the horizontal line at the bottom of the "6") may be described by a G1 movement (i.e. a straight movement of the cutting tool), with a movement in the C-axis (i.e. rotation of the cylinder). A vertical movement (e.g. the vertical line of the "5") may be a G2/G3 movement (i.e. circular interpolation) of the cutting tool with a movement in the Z axis. An oblique movement (e.g., the stem of the "7") may be described by a G2/G3 movement with movement of the cutting tool in both the Y and the Z axis, which can be achieved as described above, without simultaneous G2/G3 movements with a rotation in C.

It is possible to allow the user to enter the text/numerical characters that are desired to be engraved into the part by providing a prompt for the user to enter the text into the generated ISO file. For example, the user may enter a serial number that is to be engraved, which may be denoted by the instruction ENGRAVE/NUMSN in the received APT file. In such a case, an ENGRAVE/NUMSN instruction may be provided with a variable (for example, an Okuma variable) which contains the number to be written.

In the above example, if the ENGRAVE/NUMSN instruction is present in the APT, a comment and a program pause (e.g. an M0 in M-code) may be present at the beginning of the generated ISO instructions so as to signal to the operator that they must put the serial number in the variable (given as argument of ENGRAVE/NUMSN).

In this way, as the number to be engraved is only to be known at the time of execution of the ISO program, the PP generates the ISO code such that the ISO code may be able to decode each digit of the number and engrave it in order of the position of the digits in the number. As the PP also applies other arguments to the APT file (e.g. one or more of CAXIS, GORGE, and/or XPLAN), the PP can ensure that all of these arguments are taken into account when generating the ISO file for the CNC machine to follow, so as to perform the engraving.

For example, the ISO code generated by the PP may use 4 Okuma variables which are reserved for burning:

- use of V127: number to be written with 1 in front to force the display of insignificant 0s to the left,
- use of V128: reserved for the position of the digit to be written in the number
- use of V129: value of the digit to engrave at the current position in number.

In addition, if the given CNC machine does not accept GOTO with the value of a variable, it is possible to configure the PP such that it generates ISO code with IF statements for each part of code whose execution is conditioned by a value.
An example APT that may be provided to the PP may read as follows:

```
ENGRAVE/NUMSN,6,VARIABLE,V40,XPLAN, CAXIS,WIDTH,9,SPACE,3
GOTO/60, 0,80,1,0,0
GOTO/50, 0,80,1,0,0
GOTO/50,-200,80,1,0,0
GOTO/50,-200,70,1,0,0
GOTO/50, 0,70,1,0,0
GOTO/60, 0,70,1,0,0
ENGRAVE/OFF
ISTOP
```

This APT file defines the command - engraving of a serial number (ENGRAVE/NUMSN), the number of V40 variables to be received (6), and then the generic arguments for the engraving (in this case XPLAN, CAXIS, WIDTH/-SPACE arguments). The GOTO points are defined as above, then the end engraving instruction is provided, as is the instruction to stop the variable gathering program.
Given such an APT instruction, the PP may output the following ISO code:

```
(-------------------------------)
        ( --- TYPE THE SERIAL NUMBER IN VARIABLE V40 ---)
         (-------------------------------)
        N0002 M0
        ( START OF ENGRAVING SERIAL NUMBER)
        N0004 V127=V40+1000000
        N0006 V128=0
        N0008 M110
        N0010 G138
        N0012 G00 X60 Y0. Z80
        N0014 GOTO N1100
        (TOOL PATH OF CHARACTER 0 IN RELATIVE COORDONATE MOVE)
        N0016 G90 G01 M16 X51 Y0. Z75 C-19.099 F1000
        N0100 IF[V129 NE 0]N0200
        N0102 G91
        N0104 M16 Z-5 C-14.362
        N0106 X-1.1 F260
        N0108 Z10 F800
        N0110 M15 C28.723
        N0112 Z-10
        N0114 M16 C-28.723
        N0116 M15 Z10 C28.723
        N0118 X1.1 F1000
        ( RETURN TO LOOP FOR NEXT CHARACTER OF SERIAL NUMBER)
        N0120 GOTO N1100
        (TOOL PATH OF CHARACTER 1 IN RELATIVE COORDONATE MOVE)
        N0122 G90 M16 X51 Y0. Z75 C-57.296
        N0200 IF[V129 NE 1]N0300
        ( LOOP TO MANAGE EACH DIGIT OF SERIAL NUMBER)
        N1100 V128=[V128 + 1]
        N1110 IF[V128 NE 1]N1120
        ( ENGRAVE CHARACTER IN 1ST POSITION)
        (MOVE TOOL TO CENTER OF 1ST POSITION)
        N1112 G90 G01 M16 X51 Y0. Z75 C-19.099 F1000
        (ISOLATE THE 1ST DIGIT FROM SERIAL NUMBER)
        N1114 V129=FIX[[FIX[V127/100000]]- 10*[FIX[V127/1000000]]]
        (BRANCH TO THE ENGRAVING MOVES FOLLOWING V129 VALUE)
        N1116 GOTO N0100
        N1120 IF[V128 NE 2]N1130
        ( ENGRAVE CHARACTER IN 2ND POSITION)
        N1122 G90 M16 X51 Y0. Z75 C-57.296
        (ISOLATE THE 2ND DIGIT FROM SERIAL NUMBER)
        N1124 V129=FIX[[FIX[V127/10000]]- 10*[FIX[V127/100000]]]
        (BRANCH TO THE ENGRAVING MOVES FOLLOWING V129 VALUE)
```

```
N1126 GOTO N0100
N1130 IF[V128 NE 3]N1140
 (LAST DIGIT IS ENGRAVED GO BACK TO RETRACT POINT)
N1170 G90 G00 M16 C342.765
N1172 X60 Y0. Z70
 (END OF ENGRAVING SERIAL NUMBER)
N1172 RTS
```

As can therefore be seen, a PP associated with a specific CNC machine, may be configured to receive an APT file from a CAD program which designates the area and position in which engraving is to occur, gives an indication of what is to be engraved (whether that is to be a user input variable, or a predefined block of text), as well as an indication of the surface that is to be engraved (for example, an indication the arguments that are to be applied in order to fit the desired surface), and takes this information to generate an ISO code that the associated CNC machine may use to perform the engraving.

A more detailed explanation of an example of how the PP might calculate the toolpath for an engraving within a groove is now explored below.

The X, Y, Z coordinates of each of the points of each character (typically 81 points from a 9x9 matrix) are calculated based on the rectangle given by the 6 GOTOs that are generated as part of the APT file from the CAD program.

Where necessary (e.g. when calculating a tool path for an engraving within a groove), in order to compensate for cases where the CNC machine is incompatible with a helical movement (G2 or G3) at the same time as a movement in the C direction, the C position is set in the middle of the letter and the letter is engraved with movement in the Z and Y directions (whilst the z direction manages depth of the engraving).

In order to calculate the C position for each letter, the polar coordinate Xpol and Cpol is calculated according to the X, and Y coordinates of the letter in the center point (in the example with a 9x9 matrix defining the characters, point 44). Then, in order to be consistent when the text is in length (along the Z axis) and in width (along Y), the following calculations may be made:

$$Xpol = Root(X*X+Y*Y)$$

$$Cpol = 2 \times ArcTan(Y / (X + Xpol))$$

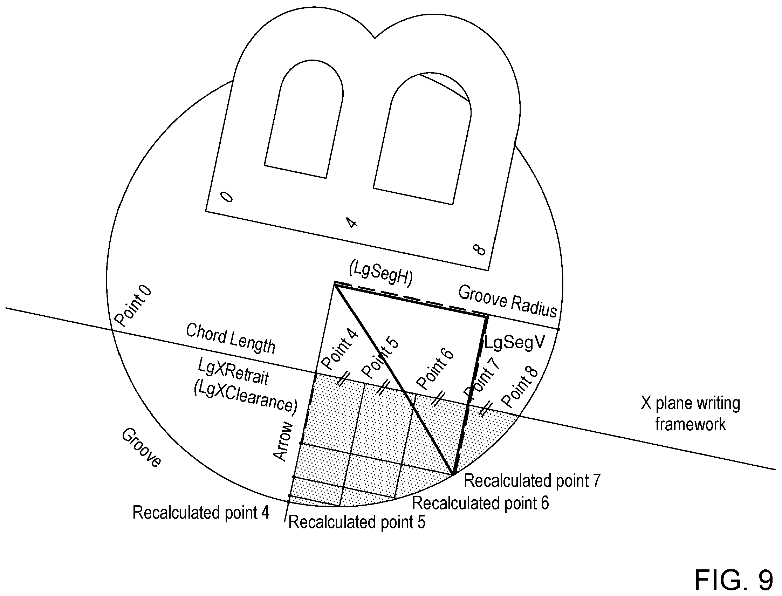

A calculation method for calculating points for the tool path to follow within the engraving is in a groove is described herein, with reference to Figure 9:

- There is a circle of radius given by the radius of the throat: called Groove Radius (RGroove) (which is defined in the input APT file)

- Then, there is a segment which intersects this circle and which is the rectangle given by the programmer (again, defined by the input APT file). This segment is called the chord: noted Chord Length (referred to as LgCord)

- This segment defined by the rectangle is divided into 8 sub-segments (a total of 9 equally spaced points, of which five points, points 4 to 8, are shown for clarity). These points correspond to the 9 vertical coordinates calculated to describe a letter on 1 column and there are 9 columns.

- The perpendicular length between the center of the circle and the chord is obtained by the following equation:

$$LgArrow = RGroove - \sqrt{Rgroove^2 - \frac{LgCord^2}{4}}$$

- The ultimate goal is to calculate the corrected coordinates which are on the arc of a circle (recalculated Point 7) from the Point 7 (which resulted from the division of the chord into 8 equal segments, described above).

- Then, the length LgSegV is calculated from the hypotenuse (the radius of the circle, Groove Radius) and the length LgSegH) (which is a function of the length of the chord LgCord and the point number). The following equation is then calculated

$$LgSegH = \frac{LgCord}{2} \times \frac{numPoint - 4}{4}$$

- The length LgSegV may be obtained as follows

$$LgSegV = \sqrt{Rgroove^2 - LgSegH^2}$$

- Therefore, the length (LgXClearance) to be removed from the origin point on the X plane can be calculated as follows

$$LgXClearance = LgSegV - (RGorge - LgArrow)$$

Such a method therefore allows for an exact calculation of how much, at a given point, the clearance of the tool needs to be modified such that it effectively lies on the surface of the groove (i.e. the distance between a given point, and its recalculated point).

As would be appreciated, the above is just a single possible method of calculating coordinates for a tool path for engraving on non-flat surfaces, and there may be other methods by which similar tool paths can be calculated. As such, the PP can calculate a tool path to provide an engraving within a grooved surface. The skilled person would recognise that other similar calculations may be applied to other generic tool paths so as to map them onto a given surface.

As alluded to above, G2/G3 commands on some CNC machines operate when there is no displacement in Y, on the ZX plane with a description of the arc by X, Z and L, with L being the radius of the arc which is to be engraved within. The arc may be defined in terms of the angle which it subtends (e.g. <180°)

However, it may be possible to make a helical engraving by adding a simultaneous movement in Y. In this way, the G2 and G3 movement may be operated even as Y evolves during the drawing of the characters, which may give better and more consistent results.

To allow the use of such an engraving method for serial numbers in an ENGRAVE/NUMSN, where the number to be engraved is given by the operator in a variable, the PP may be modified to draw each character relative to a starting point. For example, the starting point may be chosen arbitrarily in the center of each character (the point of value 44 in the 9x9 matrix of 81 points). This allows the ENGRAVE/NUMSN command to output in the ISO file the writing of the digits from 0 to 9 in relative writing which is defined according to the user-input digits which make up the number to be engraved, after having positioned the tool/workpiece in the center of each character position to write the number.

As would be appreciated, the above arguments are a selection of arguments that may be applied within an APT file, that a PP may subsequently use as a prompt to generate a specific toolpath for a given workpiece. The PP may be configured to take into account other arguments intended for other geometries/text paths in order to generate a specific tool path that is created to engrave input characters on a specific workpiece geometry.

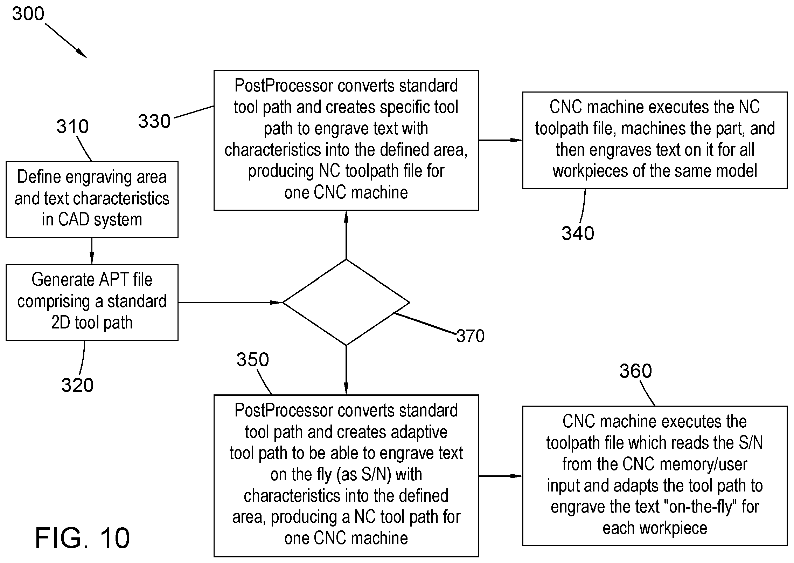

By doing so, a method of generating a toolpath for engraving on a surface of a workpiece may be provided, such as the method 300 seen in Figure 10.

As can be seen, in step 310, a user defines an engraving area (e.g. a rectangle as defined above depending on the surface to be engraved) on a CAD model of the workpiece within an existing CAD program. In addition, the characteristics of the engraving are further defined within the CAD system. For example, the user may define the spacing of the text, the width, height as well as the characters to be engraved.

Then, in step 320, a standard tool path source file (for example, in the form of an APT file) is generated based on this information. Further information regarding the contours of the surface that are to be engraved are added to the information, such as one (or more) of the arguments defined above, that the PP may use to calculate a specific toolpath for its CNC machine.

For example, should the user wish to engrave a batch number circumferentially around a cylindrical workpiece, as outlined above and described with respect to Figures 5A to 5C, they may generate an APT file containing coordinates of six points, which include a rectangle with points 2 and 5 on the surface of the workpiece, denoting the area that is to be engraved. In addition, they may indicate the width and the spacing of the characters that are to be engraved, the characters that may be engraved, as well as an indication that there should be applied XPLAN and CAXIS (using the examples above) arguments. The CAD program may be configured to invite the user to input all of this information when generating the generic (APT) tool path at step 320.

Then, a decision is taken at step 370, whether a specific tool path is to be generated so as to engrave the same text onto a number of workpieces, or whether an adaptive toolpath is to be generated for providing different engravings on each work piece (for example, if there are to be different serial numbers to be engraved on each workpiece). This decision is to be made depending on the requirements of the engraving.

In either step 330 or 350, the PP converts the standard, generic tool path to a tool path for its specific CNC machine. In order to do so, the PP utilises reference 2D toolpaths of each character that may be engraved onto a workpiece (e.g. each of digits 0 to 9, and/or letters a to z, and/or other symbols), which are subsequently mapped onto the surface of the workpiece according to the information received by steps 310, 320, along a desired text line.

As detailed in step 330, the PP may be used to generate a specific tool path for engraving on a workpiece. For example, it may be desired that a certain batch number is engraved into a number of identical or similar workpieces. In this way, the PP only needs to generate a single specific toolpath, which can be used on each workpiece so as to engrave said batch number onto each of them. In this case, the PP may convert the standard tool path to a specific tool path (e.g. a specific ISO code) to engrave the text (or other characters) into the defined area, utilising any arguments that are present within the generic toolpath.

This generated specific tool path may then be received by the CNC machine in step 340. The specific tool path for the engraving may form a small part of the overall toolpath that is used to machine the workpiece. For example, the CNC machine may first machine the overall shape of the part, and at the end, engrave onto one or more surfaces of the machined part. Alternatively, a pre-machined part may be loaded into the CNC machine, and the CNC machine may only be configured to engrave certain characters on the pre-machined workpiece.

Alternatively, in step 350, the PP may be used to generate an adaptive tool path, in that the tool path may vary between parts that are to be machined by the CNC machine. This may be particularly beneficial in the situation where it is desired that different characters are engraved on each workpiece, for example, when each workpiece is to be engraved with a unique serial number.

In such a case, the PP receives the generic tool path file (e.g. the APT file), and creates an adaptive tool path file (e.g. ISO file) that contains a template tool path for each character (in the example of a purely numeric serial number, the ISO file may contain a specific tool path for all digits 0 to 9), including relative coordinates. The output ISO file can then adapt its execution according to the character input at the CNC machine, and therefore be adapted to engrave a unique character set to each workpiece within the predefined area, from a single tool path file.

The adaptive tool path generated by the PP in step 350 may then be received by a CNC machine in step 360, which executes the toolpath file. As above, the adaptive toolpath file comprises templates of each character that might be engraved within the predefined area, and the execution of the adaptive toolpath file reads an input value from the CNC machine (e.g. a S/N from the CNC machine's variable modifier, or S/Ns that are input by an operator and adapts the engraving "on-the-fly" so as to engrave the desired number within the designated area on each workpiece.

Again, the generated adaptive toolpath may form a small part of the overall toolpath that is used to machine the workpiece. For example, the CNC machine may first machine the overall shape of the part, and at the end, engrave onto one or more surfaces of the machined part. Alternatively, a pre-machined part may be loaded into the CNC machine, and the CNC machine may only be configured to engrave certain characters on the pre-machined workpiece.

By providing increased functionalities into the PP, it is possible to reduce the work of the programmer, who would previously have had to generate a unique toolpath for each engraving, taking into account the specific contours of the surface to be engraved, as well as the line that the text is to follow. This improves both the quality and speed of the manufacturing execution. As such, the programmer does not need to have, or provide the desired text/numbers in a 3D format and/or create a tool path to follow the outline of the letter on a given surface. Rather, the programmer needs only to provide generic information regarding the workpiece, the area to be engraved, and an input of what is to be engraved (e.g. an alphanumeric input and/or other symbols/characters that are to be engraved), and which kind of surface is to be engraved (e.g. flat, curved, grooved etc.). This can all be incorporated into the generic toolpath file that is generated by a CAD program, which is then imported into the PP which generates the specific toolpath file for a given CNC machine.

In addition, the PP may generate from these simple inputs a specific toolpath file that can adapt to the specific chain of characters that is to be engraved on a specific part, and can execute a toolpath according to a unique number. In this way only a single tool path file may need to be managed, which is able to engrave any serial number. This may be achieved whilst maintaining a quality of engraving such that each letter/number is easily readable by creating specific toolpaths for a given CNC machine. This is achieved even whilst avoiding the need for the programmer to draw the engraving in 3D and then make the tool course, because it is the PP software that generates the specific toolpath, considering the surface on which it is to be engraved.

**Claims**

1. A computer-implemented method of generating a toolpath for engraving , by a CNC machine, at least one character (410, 510, 610, 710, 810) on a surface of a workpiece (400, 500, 600, 700, 800), the method comprising

   receiving, by a post processor, PP, associated with the CNC machine, information pertaining to:

   the shape of the surface to be engraved on the workpiece;

an area to be engraved on the surface of the workpiece; and
at least one character to be engraved on the surface of the workpiece;

generating, by the PP, a toolpath for engraving the at least one character on the surface of a workpiece by:
mapping a pre-stored predefined reference 2D toolpath of each character to be engraved on the surface onto the surface to be engraved according to the received information.

2. The computer-implemented method of claim 1, wherein the at least one character (410, 510, 610, 710, 810) to be engraved on the surface comprises letters and/or numbers and/or symbols.

3. The computer-implemented method of claim 1 or 2, wherein the information received by the PP comprises a list of distinct characters (410, 510, 610, 710, 810) to be engraved respectively on successive workpieces (400, 500, 600, 700, 800), and/or a list of distinct shapes of different workpieces to be engraved, and/or a list of distinct geometric characteristics of the CNC machine engraving tool; and
wherein data is selectable from said list or lists in the PP for generating the toolpath.

4. The computer-implemented method of any preceding claim, wherein the generated toolpath is an adaptative toolpath file, which when executed by the CNC machine, collects input characters to be engraved from the CNC machine, and adapts the executed toolpath so as to engrave the collected input characters.

5. The computer-implemented method of claim 4, wherein the input characters (410, 510, 610, 710, 810) are serial numbers or a list of serial numbers to be engraved on successive workpieces.

6. The computer-implemented method of any preceding claim, further comprising the step of pre-storing the predefined reference 2D toolpath on the PP.

7. The computer-implemented method of any preceding claim, wherein the surface to be engraved on the workpiece (400, 500, 600, 700, 800) is a non-planar 3D surface.

8. The computer-implemented method of any preceding claim, wherein the information received by the PP comprises a non-straight text line that the characters (410, 510, 610, 710, 810) to be engraved are to follow.

9. The computer-implemented method of any preceding claim, wherein the information received by the PP comprises geometric characteristics and operation of the associated CNC machine engraving tool.

10. The computer-implemented method of any preceding claim, wherein the step of mapping the predefined reference 2D toolpath of each character (410, 510, 610, 710, 810) to be engraved on the surface onto the surface to be engraved comprises applying one or more geometric algorithms to the predefined reference 2D toolpath of each character according to the received information regarding the shape of the surface to be engraved.

11. The computer-implemented method of any preceding claim, wherein the received information comprises information regarding the desired width and spacing of the characters (410, 510, 610, 710, 810) to be engraved.

12. The computer-implemented method of any preceding claim, wherein the received information is part of an source file generated by a CAD program, optionally wherein the source file is an APT file.

13. A method of engraving text and/or numbers on a surface of a workpiece (400, 500, 600, 700, 800), the method comprising:

generating a toolpath as claimed in any preceding claim;
loading a workpiece into a CNC machine; and
engraving, by the CNC machine, the characters on the surface of the workpiece according to the generated tool path.

14. A system for generating a toolpath, the system comprising:
a post processor, PP, associated to **a** CNC machine , wherein the PP is configured to

receive information pertaining to:

the shape of the surface to be engraved on a workpiece (400, 500, 600, 700, 800);
an area to be engraved on the surface of the workpiece; and
at least one character (410, 510, 610, 710, 810) to be engraved on the surface of the workpiece;

generate a toolpath for engraving the at least one character on the surface of a workpiece by:
mapping a predefined reference 2D toolpath of each character to be engraved on the surface onto the surface to be engraved according to the received information.

15. A system for engraving a workpiece, the system comprising;

a CNC machine configured to engrave characters on a surface of a workpiece (400, 500, 600, 700, 800); and
the system for generating a toolpath of claim 14, wherein the PP is operatively connected to the CNC machine such that the CNC machine is configured to receive a toolpath from the PP.

**Patentansprüche**

1. Computerimplementiertes Verfahren zur Erzeugung eines Werkzeugweges zur Gravur mindestens eines Zeichens (410, 510, 610, 710, 810) auf einer Oberfläche eines Werkstücks (400, 500, 600, 700, 800) durch eine CNC-Maschine, wobei das Verfahren Folgendes umfasst:
Empfangen von Informationen durch einen Postprozessor, PP, der mit der CNC-Maschine verbunden ist, im Hinblick auf:

die Form der Oberfläche, die auf dem Werkstück zu gravieren ist; einen Bereich, der auf der Oberfläche des Werkstücks zu gravieren ist; und
mindestens ein Zeichen, das auf der Oberfläche des Werkstücks zu gravieren ist;
Erzeugen eines Werkzeugweges zur Gravur des mindestens einen Zeichens auf der Oberfläche eines Werkstücks durch den PP durch: Abbilden eines vorab gespeicherten, vordefinierten 2D-Referenzwerkzeugweges für jedes auf der Oberfläche zu gravierende Zeichen auf die zu gravierende Oberfläche gemäß den empfangenen Informationen.

2. Computerimplementiertes Verfahren nach Anspruch 1, wobei das mindestens eine Zeichen (410, 510, 610, 710, 810), das auf der Oberfläche zu gravieren ist, Buchstaben und/oder Zahlen und/oder Symbole umfasst.

3. Computerimplementiertes Verfahren nach Anspruch 1 oder 2, wobei die durch den PP empfangenen Informationen eine Liste von verschiedenen Zeichen (410, 510, 610, 710, 810), die jeweils auf aufeinanderfolgenden Werkstücken (400, 500, 600, 700, 800) zu gravieren sind, und/oder eine Liste von verschiedenen Formen unterschiedlicher Werkstücke, die zu gravieren sind, und/oder eine Liste von verschiedenen geometrischen Merkmalen des Gravierwerkzeugs der CNC-Maschine umfassen; und
wobei Daten aus der Liste oder den Listen in dem PP zur Erzeugung des Werkzeugweges auswählbar sind.

4. Computerimplementiertes Verfahren nach einem der vorhergehenden Ansprüche, wobei der erzeugte Werkzeugweg eine adaptive Werkzeugwegdatei ist, die bei Ausführung durch die CNC-Maschine die zu gravierenden Eingabezeichen von der CNC-Maschine erfasst und den ausgeführten Werkzeugweg so anpasst, dass die erfassten Eingabezeichen graviert werden.

5. Computerimplementiertes Verfahren nach Anspruch 4, wobei es sich bei den Eingabezeichen (410, 510, 610, 710, 810) um Seriennummern oder eine Liste von Seriennummern handelt, die auf aufeinanderfolgenden Werkstücken zu gravieren sind.

6. Computerimplementiertes Verfahren nach einem der vorhergehenden Ansprüche, ferner umfassend den Schritt des Vorspeicherns des vordefinierten 2D-Referenzwerkzeugweges auf dem PP.

7. Computerimplementiertes Verfahren nach einem der vorhergehenden Ansprüche, wobei die auf dem Werkstück (400, 500, 600, 700, 800) zu gravierende Oberfläche eine nicht planare 3D-Oberfläche ist.

8. Computerimplementiertes Verfahren nach einem der vorhergehenden Ansprüche, wobei die durch den PP empfangenen Informationen eine nicht gerade Textzeile umfassen, der die zu gravierenden Zeichen (410, 510, 610, 710, 810) folgen sollen.

9. Computerimplementiertes Verfahren nach einem der vorhergehenden Ansprüche, wobei die durch den PP empfangenen Informationen geometrische Merkmale und Funktionsweise des verbundenen Gravierwerkzeugs der CNC-Maschine umfassen.

10. Computerimplementiertes Verfahren nach einem der vorhergehenden Ansprüche, wobei der Schritt des Abbildens des vordefinierten 2D-Referenzwerkzeugweges jedes auf der Oberfläche zu gravierenden Zeichens (410, 510, 610, 710, 810) auf die zu gravierende Oberfläche Anwenden eines oder mehrerer geometrischen Algorithmen auf den vordefinierten 2D-Referenzwerkzeugweg jedes Zeichens gemäß den empfangenen Informationen bezüglich der Form der zu gravierenden Oberfläche umfasst.

11. Computerimplementiertes Verfahren nach einem der vorhergehenden Ansprüche, wobei die empfangenen Informationen Informationen bezüglich der gewünschten Breite und des gewünschten Abstands der zu gravierenden Zeichen (410, 510, 610, 710, 810) umfassen.

12. Computerimplementiertes Verfahren nach einem der vorhergehenden Ansprüche, wobei die empfangenen Informationen Teil einer durch ein CAD-Programm erzeugten Quelldatei sind, wobei die Quelldatei optional eine APT-Datei ist.

13. Verfahren zur Gravur von Text und/oder Zahlen auf einer Oberfläche eines Werkstücks (400, 500, 600, 700, 800), wobei das Verfahren Folgendes umfasst:

Erzeugen eines Werkzeugweges gemäß einem der vorhergehenden Ansprüche;
Einlegen eines Werkstücks in eine CNC-Maschine; und
Gravieren der Zeichen auf der Oberfläche des Werkstücks durch die CNC-Maschine gemäß dem erzeugten Werkzeugweg.

14. System zur Erzeugung eines Werkzeugweges, wobei das System Folgendes umfasst:
ein Postprozessor, PP, der mit einer CNC-Maschine verbunden ist, wobei der PP konfiguriert ist, um Informationen im Hinblick auf Folgendes zu empfangen:

die Form der Oberfläche, die auf einem Werkstück (400, 500, 600, 700, 800) zu gravieren ist;
einen Bereich, der auf der Oberfläche des Werkstücks zu gravieren ist; und
mindestens ein Zeichen (410, 510, 610, 710, 810), das auf der Oberfläche des Werkstücks zu gravieren ist;
Erzeugen eines Werkzeugweges zur Gravur des mindestens einen Zeichens auf der Oberfläche eines Werkstücks durch:
Abbilden eines vordefinierten 2D-Referenzwerkzeugweges für jedes auf der Oberfläche zu gravierende Zeichen auf die zu gravierende Oberfläche gemäß den empfangenen Informationen.

15. System zur Gravur eines Werkstücks, wobei das System Folgendes umfasst:

eine CNC-Maschine, die konfiguriert ist, um Zeichen auf einer Oberfläche eines Werkstücks (400, 500, 600, 700, 800) zu gravieren; und
das System zur Erzeugung eines Werkzeugweges nach Anspruch 14, wobei der PP mit der CNC-Maschine derart wirkverbunden ist, dass die CNC-Maschine konfiguriert ist, um einen Werkzeugweg von dem PP zu empfangen.

**Revendications**

1. Procédé mis en œuvre par ordinateur de génération d'un trajet d'outil pour la gravure, par une machine CNC, d'au moins un caractère (410, 510, 610, 710, 810) sur une surface d'une pièce (400, 500, 600, 700, 800), le procédé comprenant la réception, par un post-processeur, PP, associé à la machine CNC, d'informations relatives à :

la forme de la surface à graver sur la pièce ;
une zone à graver sur la surface de la pièce ; et
au moins un caractère à graver sur la surface de la pièce ;

la génération, par le PP, d'un trajet d'outil pour graver l'au moins un caractère sur la surface d'une pièce à usiner par :

le mappage d'un trajet d'outil 2D de référence prédéfini et pré-stocké pour chaque caractère à graver sur la surface à graver selon les informations reçues.

2. Procédé mis en œuvre par ordinateur selon la revendication 1, dans lequel l'au moins un caractère (410, 510, 610, 710, 810) à graver sur la surface comprend des lettres et/ou des chiffres et/ou des symboles.

3. Procédé mis en œuvre par ordinateur selon la revendication 1 ou 2, dans lequel les informations reçues par le PP comprennent une liste de caractères distincts (410, 510, 610, 710, 810) à graver respectivement sur des pièces successives (400, 500, 600, 700, 800), et/ou une liste de formes distinctes de différentes pièces à graver, et/ou une liste de caractéristiques géométriques distinctes de l'outil de gravure de machine CNC ; et dans lequel les données sont sélectionnables à partir de ladite liste ou desdites listes dans le PP pour générer le trajet d'outil.

4. Procédé mis en œuvre par ordinateur selon une quelconque revendication précédente, dans lequel le trajet d'outil généré est un fichier de trajet d'outil adaptatif qui, lorsqu'il est exécuté par la machine CNC, collecte des caractères d'entrée à graver à partir de la machine CNC et adapte le trajet d'outil exécuté afin de graver les caractères d'entrée collectés.

5. Procédé mis en œuvre par ordinateur selon la revendication 4, dans lequel les caractères d'entrée (410, 510, 610, 710, 810) sont des numéros de série ou une liste de numéros de série à graver sur des pièces successives.

6. Procédé mis en œuvre par ordinateur selon une quelconque revendication précédente, comprenant en outre l'étape de pré-stockage du trajet d'outil 2D de référence prédéfini sur le PP.

7. Procédé mis en œuvre par ordinateur selon une quelconque revendication précédente, dans lequel la surface à graver sur la pièce (400, 500, 600, 700, 800) est une surface 3D non plane.

8. Procédé mis en œuvre par ordinateur selon une quelconque revendication précédente, dans lequel les informations reçues par le PP comprennent une ligne de texte non droite que les caractères (410, 510, 610, 710, 810) à graver doivent suivre.

9. Procédé mis en œuvre par ordinateur selon une quelconque revendication précédente, dans lequel les informations reçues par le PP comprennent des caractéristiques géométriques et le fonctionnement de l'outil de gravure de machine CNC associé.

10. Procédé mis en œuvre par ordinateur selon une quelconque revendication précédente, dans lequel l'étape de mappage du trajet d'outil 2D de référence prédéfini de chaque caractère (410, 510, 610, 710, 810) à graver sur la surface à graver comprend l'application d'un ou de plusieurs algorithmes géométriques au trajet d'outil 2D de référence prédéfini de chaque caractère selon les informations reçues concernant la forme de la surface à graver.

11. Procédé mis en œuvre par ordinateur selon une quelconque revendication précédente, dans lequel les informations reçues comprennent des informations concernant la largeur et l'espacement souhaités des caractères (410, 510, 610, 710, 810) à graver.

12. Procédé mis en œuvre par ordinateur selon une quelconque revendication précédente, dans lequel les informations reçues font partie d'un fichier source généré par un programme de CAO, éventuellement dans lequel le fichier source est un fichier APT.

13. Procédé de gravure de texte et/ou de chiffres sur une surface d'une pièce (400, 500, 600, 700, 800), le procédé comprenant :

la génération d'un trajet d'outil selon une quelconque revendication précédente ;
le chargement d'une pièce dans une machine CNC ; et
la gravure, par la machine CNC, des caractères sur la surface de la pièce selon le trajet d'outil généré.

14. Système de génération d'un trajet d'outil, le système comprenant :

un post-processeur, PP, associé à une machine CNC, dans lequel le PP est configuré pour recevoir des informations relatives à :

la forme de la surface à graver sur une pièce (400, 500, 600, 700, 800) ;
une zone à graver sur la surface de la pièce ; et
au moins un caractère (410, 510, 610, 710, 810) à graver sur la surface de la pièce ;
générer un trajet d'outil pour graver l'au moins un caractère sur la surface d'une pièce à usiner par :
le mappage d'un trajet d'outil 2D de référence prédéfini pour chaque caractère à graver sur la surface à graver selon les informations reçues éventuellement dans lequel le fichier source est un fichier APT.

15. Système pour graver une pièce, le système comprenant :

une machine CNC configurée pour graver des caractères sur la surface d'une pièce (400, 500, 600, 700, 800) ; et
le système de génération d'un trajet d'outil selon la revendication 14, dans lequel le PP est connecté fonctionnellement à la machine CNC de sorte que la machine CNC est configurée pour recevoir un trajet d'outil à partir du PP.

100

Engraving is made manually
by an operator with an
engraving pen

200

| Static text is modernized in the CAD 3D model and 3D tool path is generated | → | PostProcessor converts the CAD 3D tool path to NC tool path file for one CNC machine | → | CNC maching executes the toolpath file and engrave text for part model |

## FIG. 1
### PRIOR ART

FIG. 2

FIG. 3

FIG. 4

FIG. 5B

FIG. 5A

FIG. 5C

600

FIG. 6A

pt 2
pt 5

FIG. 6B

FE450

RBONJOURXPLANCAXISYD

610

600

FIG. 6C

FIG. 7A

FIG. 7B

FIG. 8A

G2/G3 Move
with Y and Z axis

G1 Move with C axis

G2/G3 Move with Z axis

FIG. 8B

FIG. 9

EP 4 343 471 B1

300

310 330

**Define engraving area and text characteristics in CAD system**

**PostProcessor converts standard tool path and creates specific tool path to engrave text with characteristics into the defined area, producing NC toolpath file for one CNC machine**

**CNC machine executes the NC toolpath file, machines the part, and then engraves text on it for all workpieces of the same model**

340

**Generate APT file comprising a standard 2D tool path**

320

350 370

360

**PostProcessor converts standard tool path and creates adaptive tool path to be able to engrave text on the fly (as S/N) with characteristics into the defined area, producing a NC tool path for one CNC machine**

**CNC machine executes the toolpath file which reads the S/N from the CNC memory/user input and adapts the tool path to engrave the text "on-the-fly" for each workpiece**

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3945381 A1
- CN 112659796 A
- US 10466681 B1
- US 2015005924 A1